# EUROPÄISCHE PATENTSCHRIFT

(11) **EP 1 464 862 B1**
(45) Veröffentlichungstag und Bekanntmachung des Hinweises auf die Patenterteilung: **19.05.2010**
(21) Anmeldenummer: 04006180.6
(22) Anmeldetag: 16.03.2004
(51) Int. Cl.: F16D 25/08

(54) **Zentralausrücker für eine hydraulische Kupplungsbetätigung**
Central releaser for a hydraulic clutch actuator
Dispositif central de débrayage pour un embrayage hydraulique

(30) Priorität: 02.04.2003 DE 10314864
(43) Veröffentlichungstag der Anmeldung: 06.10.2004
(73) Patentinhaber: FTE automotive GmbH, 96106 Ebern (DE)
(72) Erfinder: Braun, Ruthart, 97488 Stadtlauringen (DE); Gebert, Stefan, 96242 Gestungshausen (DE); Kuhn, Elmar, 96176 Pfarrweisach (DE); Gnyp, Jan, 96106 Ebern (DE); Burkard, Johannes, 97486 Königsberg (DE)
(74) Vertreter: Oppermann, Mark

(56) Entgegenhaltungen:
- WO-A-01/71209
- DE-A1- 19 742 468
- DE-A1- 19 755 772
- DE-A1- 19 923 853
- US-A1- 2001 004 038

## Beschreibung

Die vorliegende Erfindung bezieht sich auf einen Zentralausrücker für eine hydraulische Kupplungsbetätigung gemäß dem Oberbegriff des Patentanspruchs 1. Insbesondere bezieht sich die Erfindung auf einen Zentralausrücker einer hydraulischen Kupplungsbetätigung für eine Kraftfahrzeug-Reibkupplung, wie sie massenweise in der Automobilindustrie zum Einsatz kommen.

Eine herkömmliche hydraulische Kupplungsbetätigung für Kraftfahrzeuge hat einen an einen mit Hydraulikflüssigkeit gefüllten Ausgleichsbehälter angeschlossenen Geberzylinder, der z.B. über ein Kupplungspedal betätigt werden kann. Der Geberzylinder ist über eine Druckleitung mit einem Nehmerzylinder hydraulisch verbunden, so daß der durch Niedertreten des Kupplungspedals im Geberzylinder erzeugte Druck über die Flüssigkeitssäule in der Druckleitung auf den Nehmerzylinder übertragbar ist. Im Ergebnis wird das Ausrücklager der Reibkupplung von dem Nehmerzylinder mit einer Betätigungskraft beaufschlagt, um über einen Ausrückmechanismus die Kupplungsdruckplatte von der Kupplungsmitnehmerscheibe und somit den Motor vom Getriebe des Kraftfahrzeugs zu trennen.

Um eine gleichmäßige Betätigung der Reibkupplung bei möglichst geringem Platzbedarf des Nehmerzylinders zu gewährleisten, ist im Stand der Technik vorgeschlagen worden, den Nehmerzylinder als Ringzylinder auszubilden, der um die Kupplungs- bzw. Getriebewelle herum angeordnet und vorzugsweise am Getriebegehäuse befestigt ist. In dem Ringzylinder ist ein Ringkolben in axialer Richtung der Kupplungs- bzw. Getriebewelle verschiebbar angeordnet, der mit dem Ausrücklager der Reibkupplung in Wirkverbindung steht. Bei hydraulischer Beaufschlagung des Ringzylinders über die Druckleitung wirkt der Ringkolben über das Ausrücklager auf den Ausrückhebel der Reibkupplung, um diese auszurücken. Derartige Nehmerzylinder werden aufgrund ihrer zur Kupplungs- bzw. Getriebewelle konzentrischen Anordnung auch als Zentralausrücker bezeichnet.

Moderne Zentralausrücker - siehe die den Oberbegriff des Patentanspruchs 1 bildende DE 197 42 468 A1 - haben ein aus Kosten- und Gewichtsgründen vornehmlich aus Kunststoff gefertigtes Zylindergehäuse mit einer Zylinderwandung sowie eine vornehmlich aus Stahlblech tiefgezogene Führungshülse, die konzentrisch innerhalb der Zylinderwandung angeordnet ist. Auf der Führungshülse ist der über das Ausrücklager mit der Reibkupplung wirkverbindbare Ringkolben verschiebbar geführt, der wahlweise über einen von der Zylinderwandung und der Führungshülse begrenzten ringförmigen Druckraum mit einem Druckmittel beaufschlagt werden kann, um die Reibkupplung auszurücken. Bei diesem Stand der Technik weist die Führungshülse endseitig einen Ringflansch auf, der eine vom Ringkolben abgewandte Stirnfläche sowie eine radial äußere Mantelfläche hat und über den die Führungshülse an einer Stirnseite des Zylindergehäuses befestigt ist.

Im Stand der Technik fehlt es nicht an Vorschlägen, wie der Ringflansch der Führungshülse am Zylindergehäuse zu befestigen ist. So offenbart die DE 197 42 468 A1 eine Schnappverbindung zwischen Führungshülse und Zylindergehäuse, bei der der Ringflansch der Führungshülse umfangsseitig mit einer rechtwinkligen Abkantung zur Ausbildung eines Axialabschnitts versehen ist, welcher endseitig einen radial nach außen gerichteten Bord aufweist, während das Zylindergehäuse stirnseitig eine Ringnut besitzt, die eine Hinterschneidung hat, an der im eingebauten Zustand der Führungshülse der Bord verrastet. Konzentrisch zur Ringnut ist das Zylindergehäuse mit einem Einschnitt versehen, dessen Länge die der Ringnut noch übertrifft und der ein radiales Ausweichen einer die Hinterschneidung bildenden Schnappnase des Zylindergehäuses beim Einführen des Axialabschnitts des Ringflansches in die Ringnut des Zylindergehäuses erst ermöglicht.

Ein Nachteil dieses Stands der Technik ist neben der aufwendigen Ausgestaltung des Ringflansches der Führungshülse (Axialabschnitt mit endseitigem Bord) sowie des Zylindergehäuses im Hinblick auf die Anbindung der Führungshülse (Ringnut mit Hinterschneidung und dazu konzentrischer Einschnitt) darin zu sehen, daß die Ausbildung der Schnappverbindung mit dem Axialabschnitt und dem Bord an dem Ringflansch der Führungshülse einerseits sowie der Hinterschneidung und dem Einschnitt an dem Zylindergehäuse andererseits insbesondere auch eine verhältnismäßig große axiale Baulänge des Zentralausrückers bedingt. Der axiale Bauraum für den Zentralausrücker ist im Antriebsstrang des Kraftfahrzeugs, in dem die Reibkupplung, der Zentralausrücker und das Schaltgetriebe in Reihe hintereinander angeordnet sind, aber sehr eng bemessen. Erschwerend hinzu kommt hier, daß Variantenkonstruktionen verbreitet sind, bei denen leistungsverschiedene Reibkupplungen im gleichen Kupplungsgehäuse untergebracht werden, was durch den Zentralausrücker nicht behindert werden darf.

Neben den oben beschriebenen Schnappverbindungen zwischen Führungshülse und Zylindergehäuse (siehe in diesem Zusammenhang auch die DE 199 23 853 A1) sind im Stand der Technik des weiteren Konstruktionen bekannt geworden, bei denen zur Befestigung der Führungshülse am Zylindergehäuse des Zentralausrückers eine Schraubverbindung (WO 01/71209 A1: Fig. 2), eine Laschenverbindung (WO 01/71209 A1: Fig. 5, 6), eine Nietverbindung (WO 01/71209 A1: Fig. 7) oder eine Verbindung mittels Verstemmen von Gußansätzen des Zylindergehäuses (DE 296 08 918 U1 bzw. DE 197 16 219 A1) zum Einsatz kommt. Schließlich sind in diesem Zusammenhang noch Zentralausrücker vorgeschlagen worden, bei denen zum Halten der Führungshülse am Zylindergehäuse letzteres eine Ringschulter oder Ringschultersegmente aufweist (DE 697 10 176 T2: Fig. 2-6), die auf ein Ringteil aufgefalzt bzw. mit diesem verstemmt wird/werden, welches seinerseits am Ringflansch der Führungshülse anliegt, um diesen an einem Absatz des Zylindergehäuses festzulegen, oder ein Sicherungsbügel vorgesehen ist (DE 199 56 771 A1: Fig. 2), der in eine Auskehlung eingesetzt ist, die an der Innenfläche einer axialen Verlängerung des Zylindergehäuses eingearbeitet ist. Auch diese Verbindungen erfordern jedoch einen zusätzlichen axialen Bauraum bzw. eine aufwendige Formgebung zumindest des Ringflansches der Führungshülse oder des Zylindergehäuses.

Ausgehend vom Stand der Technik gemäß der DE 197 42 468 A1 liegt der Erfindung daher die Aufgabe zugrunde, einen möglichst einfach ausgebildeten Zentralausrücker für eine hydraulische Kupplungsbetätigung zu schaffen, der eine möglichst kleine axiale Baulänge aufweist.

Diese Aufgabe wird durch die im Patentanspruch 1 angegebenen Merkmale gelöst. Vorteilhafte und/oder zweckmäßige Weiterbildungen der Erfindung sind Gegenstand der Patentansprüche 2 bis 9.

Erfindungsgemäß ist bei einem Zentralausrücker für eine hydraulische Kupplungsbetätigung, der ein eine Zylinderwandung aufweisendes Zylindergehäuse und eine konzentrisch innerhalb der Zylinderwandung angeordnete Führungshülse hat, auf der ein mit der Kupplung wirkverbindbarer Ringkolben verschiebbar geführt ist, der wahlweise über einen von der Zylinderwandung und der Führungshülse begrenzten Druckraum mit einem Druckmittel beaufschlagbar ist, um die Kupplung auszurücken, wobei die Führungshülse endseitig einen Ringflansch mit einer vom Ringkolben abgewandten Stirnfläche und einer radial äußeren Mantelfläche aufweist, über den die Führungshülse an einer Stirnseite des Zylindergehäuses befestigt ist, dem Ringflansch benachbart eine Merhzahl von in der Draufsicht gesehen Kreisringstückförmigen, von der Stirnseite ausgehenden Axialnuten in dem Zylindergehäuse ausgebildet, in die jeweils ein im wesentlichen Komplementär geformtes Einsatzteil fest eingesetzt ist, das den Ringflansch nur an dessen Mantelfläche hintergreift, um die Führungshülse am Zylindergehäuse zu befestigen, wobei eine vom Ringkolben abgewandte Oberseite des Einsatzteils in einer durch die Stirnfläche des Ringflansches definierten Ebene oder, vom Ringkolben aus gesehen, vor dieser liegt.

Dadurch, daß das Einsatzteil den Ringflansch der Führungshülse nur an dessen Mantelfläche hintergreift, während die vom Ringkolben abgewandte Oberseite des Einsatzteils in einer durch die Stirnfläche des Ringflansches definierten Ebene oder, vom Ringkolben aus gesehen, vor dieser Ebene liegt, mit anderen Worten gesagt also nicht über diese Ebene vom Zentralausrücker weg vorsteht, baut diese Befestigungsanordnung in axialer Richtung sehr kurz. Verglichen mit dem gattungsbildenden Stand der Technik benötigt die Axialnut auf der Stirnseite des Zylindergehäuses auch nur eine im Verhältnis geringe Tiefe, um das Einsatzteil festzulegen, und kann darüber hinaus ohne Hinterschnitte oder dergleichen ausgebildet werden. Dies ist ebenfalls einer geringen axialen Baulänge sowie einer einfachen Herstellung des Zentralausrückers förderlich. Weiterhin hat die erfindungsgemäße Anbindung der Führungshülse am Zylindergehäuse, bei der die Oberseite des Einsatzteils nicht über die von der Stirnfläche des Ringflansches definierte Ebene vom Zentralausrücker weg vorsteht, den Vorteil, daß, wenn der Zentralausrücker mit seinem Zylindergehäuse auf an sich bekannte Weise am Getriebegehäuse angeflanscht wird, wobei der Ringflansch der Führungshülse zwischen dem Zylindergehäuse und dem Getriebegehäuse aufgenommen wird, das Einsatzteil dabei jedenfalls kraftfrei bleibt, mithin die Befestigung der Führungshülse am Zylindergehäuse nicht beeinträchtigt wird. In fertigungstechnischer Hinsicht vorteilhaft ist ferner, daß der Ringflansch der Führungshülse bei der erfindungsgemäßen Befestigung der Führungshülse am Zylindergehäuse planeben ausgeführt werden kann, eine komplizierte Gestaltung des Ringflansches in Achsrichtung der Führungshülse wie beim gattungsbildenden Stand der Technik also entbehrlich ist. Auch Aussparungen, Löcher, Durchstanzungen etc. im Ringflansch der Führungshülse, die im Stand der Technik teilweise notwendig sind (DE 199 23 853 A1, WO 01/71209 A1), um die Führungshülse am Zylindergehäuse zu befestigten, werden schließlich nicht benötigt, was nicht nur die Herstellung der Führungshülse vereinfacht sondern in vorteilhafter Weise auch eine im Hinblick auf die Drehwinkellage der Führungshülse bezüglich deren Mittelachse ungerichtete Montage der Führungshülse am Zylindergehäuse gestattet.

In dem Zylindergehäuse ist eine Mehrzahl von in der Draufsicht gesehen kreisringstückförmigen Axialnuten ausgebildet, in die jeweils ein im wesentlichen komplementär geformtes, d.h. ebenfalls kreisringstückförmiges Einsatzteil eingesetzt ist. Eine solche nicht ringförmig geschlossene Ausbildung des Einsatzteils gestattet es, daß Axialnut und Einsatzteil weniger eng toleriert werden müssen, um ineinander zu passen. Etwaige Geometrieabweichungen an Axialnut bzw. Einsatzteil können ggf. durch die im Vergleich zu einer kreisringförmigen Ausbildung des Einsatzteils größere Elastizität des kreisringstückförmigen Einsatzteils ausgeglichen werden. Außerdem erhöht das in Umfangsrichtung zwischen den kreisringstückförmigen Axialnuten vorhandene Zylindergehäusematerial in vorteilhafter Weise die Steifigkeit des Zylindergehäuses.

Zum Befestigen des Einsatzteils in der Axialnut sind verschiedene Verbindungstechniken denkbar, solange diese nicht zu einem unerwünschten Mehr an axialem Bauraum führen. So kann das Einsatzteil etwa mittels eines geeigneten Klebstoffs in die Axialnut eingeklebt werden. Bevorzugt wird es aber, wenn das Zylindergehäuse und die Einsatzteile aus ultraschallschweißfähigen Kunststoffen bestehen und die Einsatzteile mit dem Zylindergehäuse ultraschallverschweißt sind. Ein Ultraschallschweißverfahren eignet sich besonders für eine kostengünstige automatisierte Montage der Einsatzteile in der Massenfertigung. Kunststoff als Werkstoff für Zylindergehäuse und Einsatzteil bringt darüber hinaus verglichen mit einer metallischen Ausführung neben Bearbeitungsvorteilen auch Gewichtsvorteile mit sich.

Hierbei können die Einsatzteile auf ihrer der Führungshülse zugewandten Innenseite und ihrer von der Führungshülse abgewandten Außenseite mit jeweils einer Stufe versehen sein, die beim Fügen des jeweiligen Einsatzteils in die zugeordnete Axialnut des Zylindergehäuses unter Ultraschalleinwirkung mit einer angrenzenden Flanke der zugeordneten Axialnut verschweißbar ist. Zwar könnte eine Verschweißung des Einsatzteils mit dem Zylindergehäuse auch nur auf einer Seite des Einsatzteils, insbesondere dessen der Führungshülse zugewandten Innenseite erfolgen, eine beidseitige Verschweißung des Einsatzteils mit den Axialnutflanken des Zylindergehäuses hat demgegenüber aber den Vorteil, daß über das Einsatzteil keine Momente auf die Verschweißungsstellen übertragen werden können. Vorteilhaft ist hier ferner, daß das Einsatzteil über seinen den Stufen vorgelagerten Abschnitt vor der Ultraschallverschweißung an der Axialnut des Zylindergehäuses vorpositioniert werden kann. Auch dies ist einer problemlosen automatisierten Montage des Einsatzteils in der Massenfertigung förderlich.

Wenn darüber hinaus die Stufe an der Innenseite des jeweiligen Einsatzteils und die Stufe an der Außenseite des jeweiligen Einsatzteils in Fügerichtung des jeweiligen Einsatzteils gesehen hinsichtlich Lage und Länge derart aufeinander abgestimmt sind, daß die Stufen gleichzeitig und im wesentlichen über die gleiche Länge mit den angrenzenden Flanken der zugeordneten Axialnut verschweißbar sind, kann es während der Ultraschallverschweißung nicht zu einem unerwünschten Kippen des Einsatzteils bezüglich der Axialnut kommen. Auch wird so die für den Ultraschallschweißvorgang benötigte Zeit minimiert.

Zweckmäßig können die Axialnuten im Zylindergehäuse einen im wesentlichen rechteckigen Nutquerschnitt aufweisen, was die Herstellung des Zylindergehäuses und des Einsatzteils vereinfacht, insbesondere wenn diese aus Kunststoff spritzgegossen werden.

Zwar ist es möglich, an dem Einsatzteil z.B. eine Haltenase mit einer Stufe vorzusehen, die eine komplementär ausgebildete Stufe an der Mantelfläche des Ringflansches hintergreift, um die Führungshülse an der Stirnseite des Zylindergehäuses in möglichst flacher Weise formschlüssig zu befestigen. Bevorzugt wird hier jedoch eine Formschlußverbindung, bei der an dem jeweiligen Einsatzteil eine Haltenase mit einer Schräge ausgebildet ist, die eine komplementär geformte, umlaufende Schräge am Ringflansch hintergreift, welche sich ausgehend von der Stirnfläche des Ringflansches an dessen Mantelfläche erstreckt. Über solche Schrägen können etwaige Toleranzen an bzw. zwischen den beteiligten Bauteilen auf einfache Weise ausgeglichen werden. Die Schräge an der Mantelfläche des Ringflansches kann, wenn die Führungshülse etwa aus einem Stahlblech tiefgezogen wird, auch leicht beim Ausschneiden der Führungshülse aus der Tiefziehronde mit ausgebildet werden, wobei der Ringflansch durch Umformung im Bereich der Schräge zugleich vorteilhaft verfestigt wird.

Eine Ausgestaltung des Zentralausrückers, bei der in dem Zylindergehäuse ausgehend von dessen Stirnseite eine Aussparung zur Aufnahme des Ringflansches ausgebildet ist, deren Tiefe gleich der oder kleiner als die Dicke des Ringflansches ist, ist ebenfalls einer kurzen Baulänge des Zentralausrückers förderlich. Dennoch kann sich so im am Getriebegehäuse montierten Zustand des Zentralausrückers die Führungshülse über den Ringflansch definiert am Getriebegehäuse abstützen, wodurch u.a. Undichtigkeiten zwischen Führungshülse und Zylindergehäuse zuverlässig vermieden werden.

Grundsätzlich ist es möglich, die Führungshülse bezüglich der Zylinderwandung über den Ringflansch zu zentrieren, oder durch montagevorrichtungsseitige Maßnahmen während der Befestigung der Führungshülse am Zylindergehäuse. Bevorzugt wird es jedoch, wenn ein Ringteil vorgesehen ist, das am vom Ringkolben abgewandten Ende des Druckraums zwischen der Führungshülse und der Zylinderwandung angeordnet ist und die Führungshülse bezüglich der Zylinderwandung zentriert. Hierdurch wird in vorteilhafter Weise eine klare Funktionszuordnung vorgegeben, bei der die Zentrierung der Führungshülse bezüglich der Zylinderwandung über das Ringteil erfolgt, während die Einsatzteile am Ringflansch der Führungshülse alleine der Befestigung der Führungshülse am Zylindergehäuse dienen.

Schließlich ist es grundsätzlich zwar möglich, den Druckraum des Zentralausrückers an dessen vom Ringkolben abgewandten Ende mittels einer Dichtung abzudichten, die zwischen der Stirnseite des Zylindergehäuses und dem Ringflansch der Führungshülse angeordnet ist, wie es etwa die oben zitierte WO 01/71209 A1 (Fig. 2) vorschlägt. Bevorzugt wird es jedoch, wenn in einer weiteren Ausgestaltung des Zentralausrückers der Druckraum gegenüber der Umgebung mittels einer am Ringteil vorgesehenen Dichtungsanordnung abgedichtet ist. Dies hat den Vorteil, daß der hydraulische Druck in dem Druckraum nicht auf die dem Ringkolben zugewandte Fläche des Ringflansches wirken kann, wodurch die Befestigung der Führungshülse am Zylindergehäuse tendenziell geschwächt werden würde.

Im folgenden wird die Erfindung anhand eines bevorzugten Ausführungsbeispiels unter Bezugnahme auf die beigefügten Zeichnungen näher erläutert. Darin zeigen:
- Fig. 1: eine oben abgebrochene Längsschnittansicht durch einen erfindungsgemäß ausgebildeten Zentralausrücker, mit einem Zylindergehäuse und einer daran über einen Ringflansch auf besondere Weise unter Verwendung von Einsatzteilen befestigten Führungshülse für einen Ringkolben,
- Fig. 2: eine im Maßstab vergrößerte Darstellung des Details X in Fig. 1, die Einzelheiten der Befestigung der Führungshülse am Zylindergehäuse zeigt,
- Fig. 3: eine im Maßstab vergrößerte, perspektivische Darstellung eines Einsatzteils, welches bei dem Zentralausrücker gemäß Fig. 1 zur Befestigung der Führungshülse am Zylindergehäuse Verwendung findet, und
- Fig. 4: eine im Maßstab vergrößerte Schnittansicht des Einsatzteils gemäß Fig. 3.

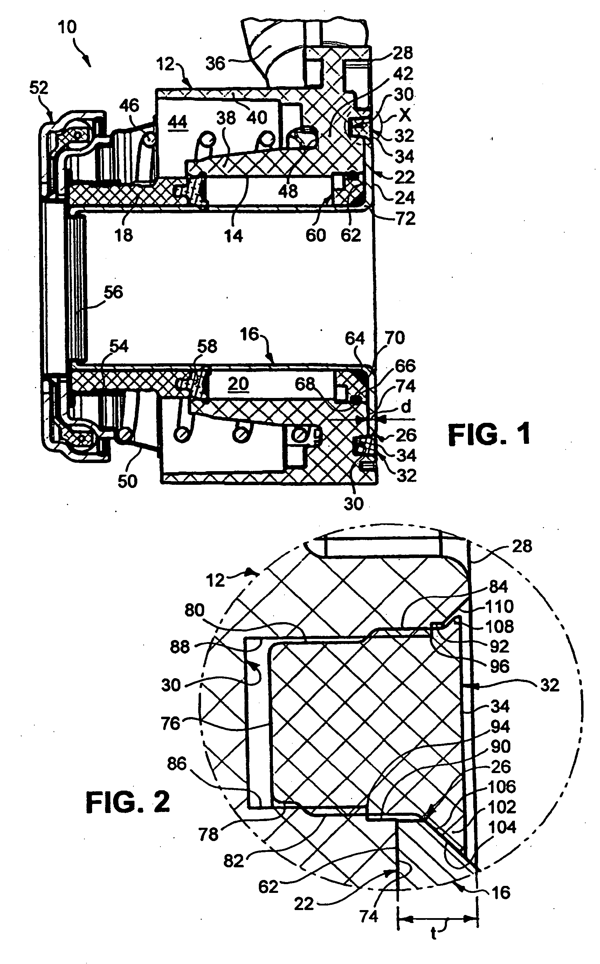

In Fig. 1 ist ein Zentralausrücker 10 für eine hydraulische Kupplungsbetätigung für Trockenreibkupplungen im nicht montierten Zustand in Grundstellung dargestellt. Der Zentralausrücker 10 hat ein aus Kunststoff bestehendes Zylindergehäuse 12 mit einer Zylinderwandung 14 und eine konzentrisch innerhalb der Zylinderwandung 14 angeordnete Führungshülse 16, die aus einem Stahlblech tiefgezogen ist. Auf der Führungshülse 16 ist ein mit der Trockenreibkupplung (nicht dargestellt) wirkverbindbarer Ringkolben 18 aus Kunststoff verschiebbar geführt, der wahlweise über einen von der Zylinderwandung 14 und der Führungshülse 16, genauer deren Außenumfangsfläche begrenzten Druckraum 20 mit einem Druckmittel beaufschlagbar ist, um die Trockenreibkupplung durch Verschiebung des Ringkolbens 18 auszurücken. Die Führungshülse 16 weist endseitig, d.h. an ihrem in Fig. 1 rechten Ende einen planebenen Ringflansch 22 auf, der eine vom Ringkolben 18 abgewandte Stirnfläche 24 und eine radial äußere Mantelfläche 26 hat. Über den Ringflansch 22 ist die Führungshülse 16 an einer Stirnseite 28 des Zylindergehäuses 12 befestigt. Wesentlich ist, daß, wie nachfolgend noch näher beschrieben werden wird, dem Ringflansch 22 benachbart eine Mehrzahl von, im dargestellten Ausführungsbeispiel zwei bezüglich der Mittelachse der Führungshülse 16 im wesentlichen diametral gegenüberliegende, von der Stirnseite 28 ausgehende Axialnuten 30 in dem Zylindergehäuse 12 ausgebildet sind, in die jeweils ein im wesentlichen komplementär geformtes Einsatzteil 32 fest eingesetzt ist, das den Ringflansch 22 an dessen Mantelfläche 26 hintergreift, um die Führungshülse 16 am Zylindergehäuse 12 zu befestigen. Dabei liegt eine vom Ringkolben 18 abgewandte Oberseite 34 jedes Einsatzteils 32 wenigstens in einer durch die Stirnfläche 24 des Ringflansches 22 der Führungshülse 16 definierten Ebene oder, vom Ringkolben 18 aus gesehen, vor dieser, wie in Fig. 2 gezeigt, wodurch diese Befestigungsanordnung in axialer Richtung des Zentralausrückers 10 nur sehr kurz baut.

Gemäß Fig. 1 hat das Zylindergehäuse 12 einen sich von seinem Außenumfang weg erstreckenden Druckstutzen 36, durch den sich ein Druckmittelkanal (nicht dargestellt) hindurch erstreckt, der an hier nicht gezeigter Stelle im Druckraum 20 mündet. An den Druckstutzen 36 kann eine Druckleitung (nicht dargestellt) angeschlossen werden, so daß das Druckmittel, namentlich Hydraulikflüssigkeit dem Druckraum 20 über den Druckmittelkanal zugeführt werden kann. Des weiteren weist das Zylindergehäuse 12 im dargestellten Ausführungsbeispiel zwei konzentrisch angeordnete, im wesentlichen hohlzylindrische Wandungsabschnitte 38, 40 auf, die an ihrem einen, d.h. in Fig. 1 rechten Ende über einen Flanschabschnitt 42 miteinander verbunden sind. Der Flanschabschnitt 42 ist außenumfangsseitig mit einer Mehrzahl von winkelbeabstandeten Befestigungsaugen (nicht dargestellt) versehen, die im Kraftfahrzeug auf an sich bekannte Weise der Befestigung des Zentralausrückers 10 an einer Getriebewand bzw. einem Getriebedeckel (nicht dargestellt) mittels beispielsweise Schrauben (nicht dargestellt) dienen, welche die Befestigungsaugen durchgreifen und den Zentralausrücker 10 mit der Stirnseite 28 des Zylindergehäuses 12 gegen die Getriebewand bzw. den Getriebedeckel ziehen. Das Zylindergehäuse 12 mit dem sich an den Flanschabschnitt 42 anschließenden Druckstutzen 36, seinen Wandungsabschnitten 38, 40 und dem diese verbindenden, die Befestigungsaugen aufweisenden Flanschabschnitt 42 ist vorzugsweise einteilig aus Kunststoff spritzgegossen.

Die zylindrische Innenumfangsfläche des radial inneren Wandungsabschnitts 38 des Zylindergehäuses 12 bildet dessen Zylinderwandung 14 aus, während die Außenumfangsfläche des Wandungsabschnitts 38 zusammen mit der Innenumfangsfläche des demgegenüber in axialer Richtung geringfügig längeren, radial äußeren Wandungsabschnitts 40 des Zylindergehäuses 12 einen Ringraum 44 begrenzt. Der Ringraum 44 ist nach links in Fig. 1 offen und endet auf der in Fig. 1 rechten Seite am Flanschabschnitt 42 des Zylindergehäuses 12.

Der Ringraum 44 dient der Aufnahme einer Vorlastfeder 46, im dargestellten Ausführungsbeispiel einer Schraubendruckfeder, die sich an ihrem in Fig. 1 rechten Ende in einer Ringnut 48 am Flanschabschnitt 42 des Zylindergehäuses 12 abstützt und auf ihrer in Fig. 1 linken Seite über einen aus einem Metallblech tiefgezogenen Federteller 50 eine definierte Vorspannkraft auf ein an sich bekanntes Ausrücklager 52 aufbringt. Das Ausrücklager 52 ist mittels eines Blechteils 54 am in Fig. 1 linken Ende des Ringkolbens 18 auf geeignete Weise befestigt, so daß das Ausrücklager 52 bei Druckbeaufschlagung des ringförmigen Druckraums 20 in axialer, d.h. in Fig. 1 horizontaler Richtung verschiebbar ist, um die Trockenreibkupplung in an sich bekannter Weise aus- bzw. einzurücken. In Fig. 1 ist ebenfalls ein am linken Ende der Führungshülse 16 befestigter Blechring 56 zu erkennen, der in radialer Richtung über die Führungshülse 16 geringfügig nach außen vorsteht und somit einen Anschlag für den Ringkolben 18 bildet, welcher verhindert, daß der Ringkolben 18 mit den damit verbundenen Bauteilen im nicht montierten Zustand des Zentralausrückers 10 von der Führungshülse 16 heruntergezogen werden kann.

Am in Fig. 1 rechten Ende des Ringkolbens 18, der in der dargestellten Grundstellung in axialer Richtung noch geringfügig mit der Zylinderwandung 14 überlappt, ist eine dynamische Dichtung in der Form einer elastomeren Dichtmanschette 58 auf geeignete Weise angebracht. Die hier zur Vereinfachung der Darstellung im unverformten Zustand gezeigte Dichtmanschette 58 liegt sowohl an der Zylinderwandung 14 des Zylindergehäuses 12 als auch an der Außenumfangsfläche der Führungshülse 16 dicht an, um den Druckraum 20 nach links in Fig. 1 abzudichten.

Am vom Ringkolben 18 abgewandten, d.h. in Fig. 1 rechten Ende des Druckraums 20 ist zwischen der Führungshülse 16, genauer deren Außenumfangsfläche und der Zylinderwandung 14 des Zylindergehäuses 12 ein vorzugsweise aus Kunststoff spritzgegossenes Ringteil 60 eingefügt, welches die Führungshülse 16 bezüglich der Zylinderwandung 14 zentriert. Das Ringteil 60 hat einen im wesentlichen L-förmigen Querschnitt, dessen kürzerer Schenkel an der Außenumfangsfläche der Führungshülse 16 anliegt, während dessen längerer Schenkel an der dem Ringkolben 18 zugewandten Ringfläche 62 des Ringflansches 22 der Führungshülse 16 anliegt. Mit seiner Außenumfangsfläche liegt das Ringteil 60 schließlich an dem Zylindergehäuse 12 an.

An dem Ringteil 60 ist ferner eine statische Dichtungsanordnung vorgesehen, die den Druckraum 20 nach rechts in Fig. 1 gegenüber der Umgebung abdichtet. Die Dichtungsanordnung weist im dargestellten Ausführungsbeispiel zwei elastomere O-Ringe 64, 66 auf, von denen der eine O-Ring 66 in einer am Außenumfang des Ringteils 60 ausgebildeten Ringnut 68 aufgenommen ist, um zwischen dem Ringteil 60 und dem Zylindergehäuse 12 abzudichten. Der andere O-Ring 64 dichtet zwischen dem Ringteil 60 und der Führungshülse 16 ab, wozu er zwischen einer Abschrägung 70 des Ringteils 60 einerseits und einem Übergangsabschnitt 72 der Führungshülse 16 zwischen deren Hülsenbereich und deren Ringflansch 22 andererseits eingefügt ist.

In Fig. 1 ist schließlich noch zu erkennen, daß in dem Zylindergehäuse 12 ausgehend von dessen Stirnseite 28 eine in einer Draufsicht von rechts in Fig. 1 gesehen kreisrunde Vertiefung oder Aussparung 74 ausgebildet ist, die der Aufnahme des Ringflansches 22 der Führungshülse 16 dient. Die Aussparung 74 hat bezogen auf eine durch die Stirnseite 28 des Zylindergehäuses 12 definierte Ebene eine in Fig. 2 eingezeichnete Tiefe t, die gleich der oder - wie im dargestellten Ausführungsbeispiel - kleiner als die in Fig. 1 eingezeichnete Dicke d des Ringflansches 22 der Führungshülse 16 ist, so daß der Ringflansch 22 der Führungshülse 16 mit seiner Stirnfläche 24 geringfügig über die Stirnseite 28 des Zylindergehäuses 12 vorsteht. Dies hat zur Folge, daß sich die Führungshülse 16 im am Getriebegehäuse (nicht dargestellt) montierten Zustand des Zentralausrückers 10 über ihren Ringflansch 22 definiert am Getriebegehäuse abstützt.

In Fig. 2 sind in einem gegenüber der Fig. 1 vergrößerten Maßstab Einzelheiten der Befestigung der Führungshülse 16 an dem Zylindergehäuse 12 zu erkennen. Vorab ist hierzu anzumerken, daß in dem dargestellten Ausführungsbeispiel das Zylindergehäuse 12 und die zwei der Befestigung der Führungshülse 16 am Zylindergehäuse 12 dienenden Einsatzteile 32 aus ultraschallschweißfähigen Kunststoffen bestehen, und im zusammengebauten Zustand des Zentralausrückers 10 jedes Einsatzteil 32 mit dem Zylindergehäuse 12 in der jeweils zugeordneten Axialnut 30 tatsächlich ultraschallverschweißt ist. Zur Vereinfachung der Darstellung und Verdeutlichung der ursprünglichen Geometrien sind in Fig. 2 jedoch das Zylindergehäuse 12 und das Einsatzteil 32 im nicht ultraschallverschweißten Zustand übereinander gezeichnet, wobei die Lage des eingezeichneten Einsatzteils 32 der Lage eines mit dem Zylindergehäuse 12 ultraschallverschweißten Einsatzteils 32 im wesentlichen entspricht.

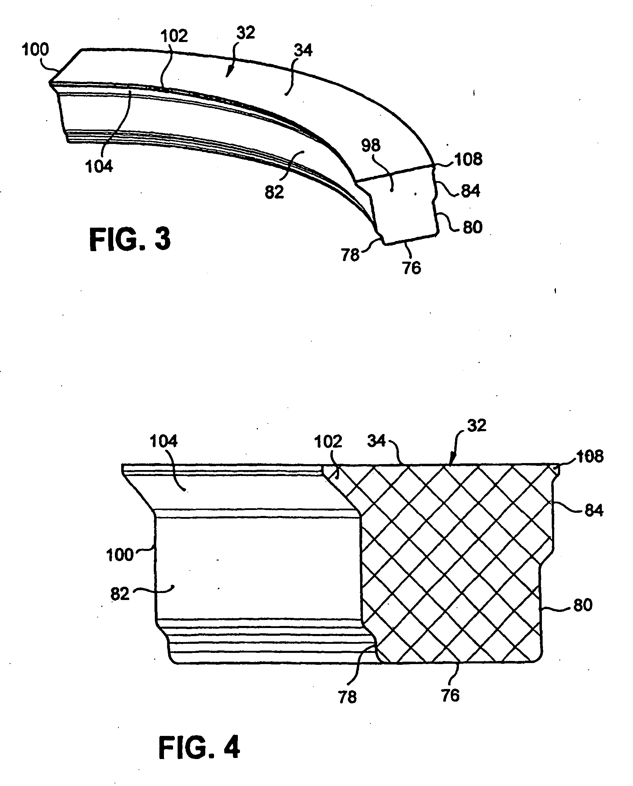

Wie bereits eingangs der Figurenbeschreibung erwähnt, sind im dargestellten Ausführungsbeispiel zwei Axialnuten 30, die von der Stirnseite 28 des Zylindergehäuses 12 ausgehen, in bezüglich der Mittelachse der Führungshülse 16 im wesentlichen diametral gegenüberliegender Anordnung im Zylindergehäuse 12 ausgebildet. In radialer Richtung gesehen liegen die Axialnuten 30, die gemäß Fig. 2 einen im wesentlichen rechteckigen Nutquerschnitt aufweisen, am Rand der Aussparung 74 im Zylindergehäuse 12. In einer Draufsicht von rechts in den Fig. 1 und 2 betrachtet hat jede Axialnut 30 die Form eines Kreisringstücks. In die Axialnuten 30 ist jeweils ein Einsatzteil 32 fest eingesetzt, welches eine zur Form der Axialnut 30 im wesentlichen komplementäre Form aufweist, wie die Fig. 3 und 4 veranschaulichen.

Das eine gemäß den Fig. 2 und 4 plane Unterseite 76 aufweisende Einsatzteil 32 ist, wie insbesondere die Fig. 2 zeigt, auf seiner der Führungshülse 16 zugewandten Innenseite 78 und seiner von der Führungshülse 16 abgewandten Außenseite 80 mit jeweils einer Stufe 82, 84 versehen. Die Stufen 82, 84 sind beim Fügen des Einsatzteils 32 in die zugeordnete Axialnut 30 des Zylindergehäuses 12 unter Ultraschalleinwirkung mit einer angrenzenden Flanke 86 bzw. 88 der Axialnut 30 verschweißbar, wozu die Stufen 82, 84 bezüglich der radialen Abmessungen der Axialnut 30 ein gewisses Übermaß haben. Hierbei sind die Stufe 82 an der Innenseite 78 des Einsatzteils 32 und die Stufe 84 an der Außenseite 80 des Einsatzteils 32 in Fügerichtung des Einsatzteils 32, d.h. in horizontaler Richtung in Fig. 2 gesehen hinsichtlich Lage und Länge derart aufeinander abgestimmt, daß die Stufen 82, 84 gleichzeitig und - wie die überlappenden Bereiche von Zylindergehäuse 12 und Einsatzteil 32 in Fig. 2 verdeutlichen - im wesentlichen über die gleiche Länge mit den angrenzenden Flanken 86 bzw. 88 der Axialnut 30 verschweißbar sind. Erwähnt sei in diesem Zusammenhang noch, daß die Axialnut 30 innenumfangs- wie außenumfangsseitig mit jeweils einer im Querschnitt rechteckigen Aussparung 90 bzw. 92 versehen ist, die in der Axialnut 30 eine Kante 94 bzw. 96 ausbildet. Die hinsichtlich ihrer Abmessungen auf die Stufen 82, 84 abgestimmten Aussparungen 90, 92 dienen der Vorzentrierung des Einsatzteils 32 an dessen Stufen 82, 84 beim Fügen des Einsatzteils 32 in die zugeordnete Axialnut 30.

Wie die Fig. 2 bis 4 des weiteren zeigen, hat das in Umfangsrichtung mit planen Stirnflächen 98, 100 abschließende und an allen Flächenübergängen leicht verrundete Einsatzteil 32 innenumfangsseitig eine sich an die Oberseite 34 und die Stufe 82 anschließende Haltenase 102 mit einer Schräge 104. Gemäß Fig. 2 hintergreift die im Querschnitt dreieckige Haltenase 102 mit ihrer Schräge 104 eine am Ringflansch 22 der Führungshülse 16 ausgebildete, komplementär geformte, umlaufende Schräge 106, die sich ausgehend von der Stirnfläche 24 des Ringflansches 22 an dessen Mantelfläche 26 erstreckt und - anders als im dargestellten Ausführungsbeispiel - auch über die gesamte Dicke d des Ringflansches 22 verlaufen könnte. Dadurch, daß im zusammengebauten Zustand des Zentralausrückers 10, in dem die Einsatzteile 32 fest in den zugeordneten Axialnuten 30 des Zylindergehäuses 12 eingesetzt sind, auf der einen Seite der Ringflansch 22 mit seiner dem Ringkolben 18 zugewandten Ringfläche 62 in der Aussparung 74 flächig am Zylindergehäuse 12 anliegt, während auf der anderen Seite die Schrägen 104 an den Haltenasen 102 der Einsatzteile 32 an der an der Mantelfläche 26 des Ringflansches 22 angebrachten Schräge 106 anliegen, ist die Führungshülse 16 in axialer Richtung des Zentralausrückers 10 formschlüssig am Zylindergehäuse 12 gehalten. In radialer Richtung wird die Führungshülse 16 mittels des Ringteils 60 bezüglich des Zylindergehäuses 12 zentriert, wie weiter oben bereits erwähnt.

In den Fig. 2 bis 4 ist schließlich noch zu erkennen, daß das Einsatzteil 32, welches eine dem Ringflansch 22 der Führungshülse 16 entsprechende Krümmung aufweist und nicht unbedingt als Vollkörper ausgebildet sein muß, sondern auch ein Wabenprofil haben könnte, außenumfangsseitig eine im Querschnitt dreieckige Anschlagnase 108 hat, die sich an die Oberseite 34 und die Stufe 84 des Einsatzteils 32 anschließt. Die Anschlagnase 108 kann beim Fügen des Einsatzteils 32 in die zugeordnete Axialnut 30 an einer an der Axialnut 30 ausgebildeten Formschräge 110 anschlagen.

Beim Zusammenbau des Zentralausrückers 10 wird zur Befestigung der Führungshülse 16 am Zylindergehäuse 12 zunächst die Führungshülse 16 in das Zylindergehäuse 12 hinein geschoben bis der Ringflansch 22 der Führungshülse 16 mit seiner Ringfläche 62 in der Aussparung 74 des Zylindergehäuses 12 an dem Zylindergehäuse 12 zur Anlage gelangt. Hierbei wird die Führungshülse 16 bezüglich der Zylinderwandung 14 des Zylindergehäuses 12 mittels des Ringteils 60 zentriert. Als nächstes werden die zwei Einsatzteile 32 in die Axialnuten 30 des Zylindergehäuses 12 hinein geschoben bis die Stufen 82, 84 des jeweiligen Einsatzteils 32 an den Kanten 94 bzw. 96 in der zugeordneten Axialnut 30 zur Anlage gelangen. In diesem Zustand ist das jeweilige Einsatzteil 32 bezüglich der zugeordneten Axialnut 30 mittels der in den Aussparungen 90, 92 an der Axialnut 30 aufgenommenen Stufen 82 bzw. 84 des Einsatzteils 32 und der zwischen den Flanken 86, 88 der Axialnut 30 aufgenommenen, den Stufen 82 bzw. 84 in Fügerichtung des Einsatzteils 32 vorgelagerten Abschnitte der Innenseite 78 bzw. Außenseite 80 des Einsatzteils 32 zentriert.

Nun schließt sich der eigentliche Ultraschall-Schweißvorgang an, bei dem jedes Einsatzteil 32 über seine Oberseite 34 mit einer Kraft beaufschlagt und unter Ultraschalleinwirkung durch eine an sich bekannte Ultraschall-Schweißvorrichtung kontinuierlich weiter in die zugeordnete Axialnut 30 hinein geschoben wird. Hierbei verschmelzen die Stufen 82 der Einsatzteile 32 mit den radial inneren Flanken 86 der Axialnuten 30, während die Stufen 84 der Einsatzteile 32 mit den radial äußeren Flanken 88 der Axialnuten 30 verschmelzen. Sobald die Haltenase 102 des jeweiligen Einsatzteils 32 mit ihrer Schräge 104 an der Schräge 106 an der Mantelfläche 26 des Ringflansches 22 und die Anschlagnase 108 des jeweiligen Einsatzteils 32 an der Formschräge 110 an der zugeordneten Axialnut 30 zur Anlage gelangt, was eine deutliche Änderung des erfaßten Kraft-Weg-Verlaufs der Einschiebebewegung zur Folge hat, wird der Ultraschall-Schweißvorgang beendet. Die Führungshülse 16 ist jetzt mittels der Einsatzteile 32 formschlüssig und unlösbar am Zylindergehäuse 12 festgelegt. Für den Fachmann ist ersichtlich, daß der obige Fügeprozeß vollautomatisch durchgeführt werden kann.

Die erzielte Formschlußverbindung ist jedenfalls ausreichend belastbar, um an dem Zentralausrücker 10 eine übliche pneumatische Dichtigkeitsprüfung durchzuführen und den Zentralausrücker 10 ohne Probleme zu transportieren. Wie bereits erwähnt, wird die erzielte Formschlußverbindung im im Kraftfahrzeug montierten Zustand des Zentralausrückers 10 noch dadurch unterstützt, daß der Ringflansch 22 der Führungshülse 16 zwischen der Getriebewand bzw. dem Getriebedeckel auf der einen Seite und dem Zylindergehäuse 12 auf der anderen Seite eingespannt ist.

Es wird ein Zentralausrücker offenbart, mit einem eine Zylinderwandung aufweisenden Zylindergehäuse und einer konzentrisch dazu angeordneten Führungshülse, auf der ein mit einer Kupplung wirkverbindbarer Ringkolben verschiebbar geführt ist, der über einen von Zylinderwandung und Führungshülse begrenzten Druckraum druckmittelbeaufschlagbar ist. Die Führungshülse hat endseitig einen Ringflansch mit einer vom Ringkolben abgewandten Stirnfläche und einer radial äußeren Mantelfläche, über den die Führungshülse an einer Stirnseite des Zylindergehäuses befestigt ist. Dem Ringflansch benachbart ist eine Mehrzahl von von der Stirnseite ausgehenden Axialnuten im Zylindergehäuse ausgebildet, in die jeweils ein Einsatzteil fest eingesetzt ist, das den Ringflansch an dessen Mantelfläche hintergreift, wobei eine vom Ringkolben abgewandte Oberseite des Einsatzteils in einer durch die Stirnfläche des Ringflansches definierten Ebene oder, vom Ringkolben aus gesehen, vor dieser liegt. Im Ergebnis wird ein einfach ausgebildeter Zentralausrücker geschaffen, der eine verhältnismäßig kleine axiale Baulänge aufweist.

### Bezugszeichenliste

- 10: Zentralausrücker
- 12: Zylindergehäuse
- 14: Zylinderwandung
- 16: Führungshülse
- 18: Ringkolben
- 20: Druckraum
- 22: Ringflansch
- 24: Stirnfläche
- 26: Mantelfläche
- 28: Stirnseite
- 30: Axialnut
- 32: Einsatzteil
- 34: Oberseite
- 36: Druckstutzen
- 38: Wandungsabschnitt
- 40: Wandungsabschnitt
- 42: Flanschabschnitt
- 44: Ringraum
- 46: Vorlastfeder
- 48: Ringnut
- 50: Federteller
- 52: Ausrücklager
- 54: Blechteil
- 56: Blechring
- 58: Dichtmanschette
- 60: Ringteil
- 62: Ringfläche
- 64: O-Ring
- 66: O-Ring
- 68: Ringnut
- 70: Abschrägung
- 72: Übergangsabschnitt
- 74: Aussparung
- 76: Unterseite
- 78: Innenseite
- 80: Außenseite
- 82: Stufe
- 84: Stufe
- 86: Flanke
- 88: Flanke
- 90: Aussparung
- 92: Aussparung
- 94: Kante
- 96: Kante
- 98: Stirnfläche
- 100: Stirnfläche
- 102: Haltenase
- 104: Schräge
- 106: Schräge
- 108: Anschlagnase
- 110: Formschräge

- d: Dicke des Ringflansches 22
- t: Tiefe der Aussparung 74

## Patentansprüche

1. Zentralausrücker (10) für eine hydraulische Kupplungsbetätigung, mit einem eine Zylinderwandung (14) aufweisenden Zylindergehäuse (12) und einer konzentrisch innerhalb der Zylinderwandung (14) angeordneten Führungshülse (16), auf der ein mit der Kupplung wirkverbindbarer Ringkolben (18) verschiebbar geführt ist, der wahlweise über einen von der Zylinderwandung (14) und der Führungshülse (16) begrenzten Druckraum (20) mit einem Druckmittel beaufschlagbar ist, um die Kupplung auszurücken, wobei die Führungshülse (16) endseitig einen Ringflansch (22) mit einer vom Ringkolben (18) abgewandten Stirnfläche (24) und einer radial äußeren Mantelfläche (26) aufweist, über den die Führungshülse (16) an einer Stirnseite (28) des Zylindergehäuses (12) befestigt ist, **dadurch gekennzeichnet, daß** dem Ringflansch (22) benachbart eine Mehrzahl von in der Draufsicht gesehen kreisringstückförmigen, von der Stirnseite (28) ausgehenden Axialnuten (30) in dem Zylindergehäuse (12) ausgebildet ist, in die jeweils ein im wesentlichen komplementär geformtes Einsatzteil (32) fest eingesetzt ist, das den Ringflansch (22) nur an dessen Mantelfläche (26) hintergreift, um die Führungshülse (16) am Zylindergehäuse (12) zu befestigen, wobei eine vom Ringkolben (18) abgewandte Oberseite (34) des Einsatzteils (32) in einer durch die Stirnfläche (24) des Ringflansches (22) definierten Ebene oder, vom Ringkolben (18) aus gesehen, vor dieser liegt.

2. Zentralausrücker (10) nach Anspruch 1, **dadurch gekennzeichnet, daß** das Zylindergehäuse (12) und die Einsatzteile (32) aus ultraschallschweißfähigen Kunststoffen bestehen und die Einsatzteile (32) mit dem Zylindergehäuse (12) ultraschallverschweißt sind.

3. Zentralausrücker (10) nach Anspruch 2, **dadurch gekennzeichnet, daß** die Einsatzteile (32) auf ihrer der Führungshülse (16) zugewandten Innenseite (78) und ihrer von der Führungshülse (16) abgewandten Außenseite (80) mit jeweils einer Stufe (82, 84) versehen sind, die beim Fügen des jeweiligen Einsatzteils (32) in die zugeordnete Axialnut (30) des Zylindergehäuses (12) unter Ultraschalleinwirkung mit einer angrenzenden Flanke (86 bzw. 88) der zugeordneten Axialnut (30) verschweißbar ist.

4. Zentralausrücker (10) nach Anspruch 3, **dadurch gekennzeichnet, daß** die Stufe (82) an der Innenseite (78) des jeweiligen Einsatzteils (32) und die Stufe (84) an der Außenseite (80) des jeweiligen Einsatzteils (32) in Fügerichtung des jeweiligen Einsatzteils (32) gesehen hinsichtlich Lage und Länge derart aufeinander abgestimmt sind, daß die Stufen (82, 84) gleichzeitig und im wesentlichen über die gleiche Länge mit den angrenzenden Flanken (86 bzw. 88) der zugeordneten Axialnut (30) verschweißbar sind.

5. Zentralausrücker (10) nach einem der vorhergehenden Ansprüche, **dadurch gekennzeichnet, daß** die Axialnuten (30) im Zylindergehäuse (12) einen im wesentlichen rechteckigen Nutquerschnitt aufweisen.

6. Zentralausrücker (10) nach einem der vorhergehenden Ansprüche, **dadurch gekennzeichnet, daß** an dem jeweiligen Einsatzteil (32) eine Haltenase (102) mit einer Schräge (104) ausgebildet ist, die eine komplementär geformte, umlaufende Schräge (106) am Ringflansch (22) hintergreift, welche sich ausgehend von der Stirnfläche (24) des Ringflansches (22) an dessen Mantelfläche (26) erstreckt.

7. Zentralausrücker (10) nach einem der vorhergehenden Ansprüche, **dadurch gekennzeichnet, daß** in dem Zylindergehäuse (12) ausgehend von dessen Stirnseite (28) eine Aussparung (74) zur Aufnahme des Ringflansches (22) ausgebildet ist, deren Tiefe (t) gleich der oder kleiner als die Dicke (d) des Ringflansches (22) ist.

8. Zentralausrücker (10) nach einem der vorhergehenden Ansprüche, **gekennzeichnet durch** ein Ringteil (60), das am vom Ringkolben (18) abgewandten Ende des Druckraums (20) zwischen der Führungshülse (16) und der Zylinderwandung (14) angeordnet ist und die Führungshülse (16) bezüglich der Zylinderwandung (14) zentriert.

9. Zentralausrücker (10) nach Anspruch 8, **dadurch gekennzeichnet, daß** der Druckraum (20) gegenüber der Umgebung mittels einer am Ringteil (60) vorgesehenen Dichtungsanordnung (64, 66) abgedichtet ist.

## Claims

1. Central release device (10) for a hydraulic clutch actuation system, comprising a cylinder housing (12) with a cylinder wall (14), and a guide sleeve (16) which is arranged concentrically inside the cylinder wall (14) and on which an annular piston (18) is displaceably guided, which piston can be operatively connected to a clutch and can be hydraulically actuated, as required, by way of a pressure chamber (20) defined by the cylinder wall (14) and the guide sleeve (16), in order to release the clutch, the guide sleeve (16) at its end having an annular flange (22) with an end face (24) facing away from the annular piston (18) and a radially outer circumferential surface (26), by way of which flange the guide sleeve (16) is fixed to an end face (28) of the cylinder housing (12), **characterized in that** a plurality of axial grooves (30) which in plan view are of segmental shape and start at the end face (28), is formed in the cylinder housing (12) adjacent to the annular flange (22), in each of which grooves an insert (32) of essentially complementary shape is firmly fitted, which insert grips behind the circumferential surface (26) of the annular flange (22) only, in order to fix the guide sleeve (16) to the cylinder housing (12), an upper side (34) of the insert (32) facing away from the annular piston (18) lying in a plane defined by the end face (24) of the annular flange (22) or in front of this plane, viewed from the annular piston (18).

2. Central release device (10) according to Claim 1,
**characterized in that** the cylinder housing (12) and the inserts (32) are composed of ultrasonically weldable plastics, and the inserts (32) are welded ultrasonically to the cylinder housing (12).

3. Central release device (10) according to Claim 2,
**characterized in that** the inserts (32), on their inside (78) facing the guide sleeve (16) and on their outside (80) facing away from the guide sleeve (16), are in each case provided with a step (82, 84), which when fitting the respective insert (32) into the assigned axial groove (30) of the cylinder housing (12), can be welded under the effect of ultrasound to an adjoining flank (86 and 88, respectively) of the assigned axial groove (30).

4. Central release device (10) according to Claim 3,
**characterized in that** the step (82) on the inside (78) of the respective insert (32) and the step (84) on the outside (80) of the respective insert (32) are in their position and length matched to one another in the fitting direction of the respective insert (32), in such a way that the steps (82, 84) can be welded to the adjoining flanks (86 and 88, respectively) of the assigned axial groove (30) simultaneously and essentially over the same length.

5. Central release device (10) according to any one of the preceding Claims, **characterized in that** the axial grooves (30) in the cylinder housing (12) have an essential rectangular groove cross-section.

6. Central release device (10) according to any one of the preceding Claims, **characterized in that** a retaining lug (102) with a bevel (104), which grips behind a circumferential bevel (106) of complementary shape on the annular flange (22), is formed on the respective insert (32), the latter bevel extending from the end face (24) of the annular flange (22) to the circumferential surface (26) thereof.

7. Central release device (10) according to any one of the preceding Claims, **characterized in that** a recess (74) is formed in the cylinder housing (12), proceeding from the end face (28) thereof, in order to accommodate the annular flange (22), the depth (t) of the recess being equal to or less than the thickness (d) of the annular flange (22).

8. Central release device (10) according to any one of the preceding Claims, **characterized by** an annular part (60) which is arranged at the end of the pressure chamber (20) facing away from the annular piston (18) between the guide sleeve (16) and the cylinder wall (14) and which centers the guide sleeve (16) in relation to the cylinder wall (14).

9. Central release device (10) according to Claim 8,
**characterized in that** the pressure chamber (20) is sealed off from the surroundings by means of a sealing arrangement (64, 66) provided on the annular part (60).

## Revendications

1. Dispositif central de débrayage (10) pour un système d'actionnement hydraulique d'embrayage, comprenant un carter de cylindre (12), qui présente une paroi de cylindre (14), et une douille de guidage (16) agencée de manière concentrique à l'intérieur de la paroi de cylindre (14) et sur laquelle est guidé de manière coulissante, un piston annulaire (18) qui peut être amené à interagir avec l'embrayage, et peut être sollicité sélectivement par un fluide de pression moyennant une chambre de pression (20) délimitée par la paroi de cylindre (14) et la douille de guidage (16), en vue de débrayer l'embrayage, la douille de guidage (16) comportant, à l'extrémité, un flasque annulaire (22) qui présente une surface frontale (24) dirigée vers l'opposé de là où se trouve le piston annulaire (18) et une surface enveloppe périphérique (26) radialement extérieure, et par l'intermédiaire duquel la douille de guidage (16) est fixée à une face frontale (28) du carter de cylindre (12),
**caractérisé en ce qu'**au voisinage du flasque annulaire (22), dans le carter de cylindre (12), sont réalisées une pluralité de rainures axiales (30) issues de la face frontale (28) et présentant une forme de secteur annulaire circulaire dans une vue en plan sur la face frontale, et **en ce que** dans chacune de ces rainures est rapportée, de manière fixe, une pièce d'insert (32) de forme sensiblement complémentaire, qui ne vient surmonter en contre-dépouille le flasque annulaire (22) qu'au niveau de sa surface enveloppe périphérique (26), en vue de fixer la douille de guidage (16) au carter de cylindre (12), un côté externe (34) de la pièce d'insert (32), qui est dirigé vers l'opposé de là où se trouve le piston annulaire (18), se situant dans un plan défini par la surface frontale (24) du flasque annulaire (22), ou bien au-devant ce plan vu à partir du piston annulaire (18).

2. Dispositif central de débrayage (10) selon la revendication 1, **caractérisé en ce que** le carter de cylindre (12) et les pièces d'insert (32) sont réalisés en matières plastiques susceptibles d'être soudées par ultrasons, et les pièces d'insert (32) sont soudées par ultrasons au carter de cylindre (12).

3. Dispositif central de débrayage (10) selon la revendication 2, **caractérisé en ce que** les pièces d'insert (32) sont munies respectivement, sur leur côté intérieur (78) dirigé vers la douille de guidage (16) et leur côté extérieur (80) dirigé vers l'opposé de là où se trouve la douille de guidage (16), d'un gradin (82, 84) qui, lors de l'assemblage de la pièce d'insert (32) respective dans la rainure axiale (30) associée du carter de cylindre (12), peut être soudé, sous l'effet des ultrasons, à un flanc adjacent (86 respectivement 88) de la rainure axiale (30) associée.

4. Dispositif central de débrayage (10) selon la revendication 3, **caractérisé en ce que** le gradin (82) sur le côté intérieur (78) de la pièce d'insert (32) respective et le gradin (84) sur le côté extérieur (80) de la pièce d'insert (32) respective, sont, vu dans la direction d'assemblage de la pièce d'insert (32) respective, adaptés réciproquement l'un à l'autre en ce qui concerne la position et la longueur, de façon telle que les gradins (82, 84) puissent être soudés simultanément et sensiblement sur la même longueur avec les flancs adjacents (86 respectivement 88) de la rainure axiale (30) associée.

5. Dispositif central de débrayage (10) selon l'une des revendications précédentes, **caractérisé en ce que** les rainures axiales (30) dans le carter de cylindre (12) présentent une section transversale de rainure sensiblement rectangulaire.

6. Dispositif central de débrayage (10) selon l'une des revendications précédentes, **caractérisé en ce que** sur la pièce d'insert (32) respective est formé un talon de retenue (102) présentant une zone inclinée (104), qui vient surmonter en contre-dépouille une zone inclinée (106) périphérique, de forme complémentaire, réalisée sur le flasque annulaire (22) et s'étendant, à partir de la surface frontale (24) du flasque annulaire (22), au niveau de la surface enveloppe périphérique (26) de celui-ci.

7. Dispositif central de débrayage (10) selon l'une des revendications précédentes, **caractérisé en ce que** dans le carter de cylindre (12), à partir de sa face frontale (28), est formé un évidement (74) destiné à recevoir le flasque annulaire (22) et dont la profondeur (t) est égale ou inférieure à l'épaisseur (d) du flasque annulaire (22).

8. Dispositif central de débrayage (10) selon l'une des revendications précédentes, **caractérisé par** une pièce annulaire (60) qui est agencée à l'extrémité de la chambre de pression (20) opposée à celle où se trouve le piston annulaire (18), entre la douille de guidage (16) et la paroi de cylindre (14), et qui assure le centrage de la douille de guidage (16) par rapport à la paroi de cylindre (14).

9. Dispositif central de débrayage (10) selon la revendication 8, **caractérisé en ce que** la chambre de pression (20) est rendue étanche vis-à-vis de l'environnement au moyen d'un agencement de joint d'étanchéité (64, 66) prévu sur la pièce annulaire (60).
